# EUROPEAN PATENT APPLICATION

(11) **EP 2 689 673 A1**
(43) Date of publication of application: **29.01.2014**
(21) Application number: 12184347.8
(22) Date of filing: 14.09.2012
(51) Int. Cl.: A23L 1/164

(54) **High dietary fibre snack cereal, with fruit and vegetables, and method of its preparation**

(30) Priority: 24.07.2012 PL 40011212
(71) Applicant: SANTE A.Kowalski Sp.j., 03-301 Warszawa (PL)
(72) Inventor: Tarasinski, Henryk, 20-539 Lublin (PL); Rzeszotarski, Marek, 03-289 Warszawa (PL)
(74) Representative: Adamczyk, Piotr

(57) **Abstract**

The contents of the dietary fibre in a cereal-fruit-vegetable snack according to the invention is large. Full fresh or deep-frozen fruits or vegetables included in the composition of such a snack comprise from 60 to 80% by weight of the total dough mass prior to the thermal treatment. Cereal bran comprise from 20 to 40% of the total dough mass prior to the thermal treatment. Additionally the snack is enriched with complementing additives in the form of vitamins, antioxidants, and flavour additives. A method of preparing such a snack consists in that cereal bran are extruded at a temperature from 100 to 160°C and under a pressure from 70 to 160 bar. Next they are dried up to a humidity from 3 to 6% and afterwards mixed in a heated drum mixer under pressure with full fresh or deep-frozen fruits or vegetables being at the same time heated till a temperature from 40 to 60°C is reached. The resulted mixture is disintegrated to an extent so as to maintain fragment of fruits or vegetables contained therein and formed into a thin band from 0.5 to 1 mm thick, which is spread on a drier belt and dried at a temperature from 90 to 130°C up to a humidity from 15 to 30%. The pre-dried mass is disintegrated to an extent so as to maintain fragments of fruits or vegetables and enriching additives such as vitamins, antioxidants and flavour additives are added to it, then the mass is mixed again and from it snacks of required shapes are formed and next dried at a temperature from 90 to 130°C till a humidity from 3 to 5 % of a final product is achieved.

## Description

The present invention relates to a high dietary fibre cereal snack, with fruits and vegetables, and method of its preparing.

Snack cereals in the form of different kinds of cakes and chips are commonly known. A snack cereal with addition of fruits or vegetables and a method of its preparation is known from a publication of an international patent application WO 2010/045025 A1. An exemplary snack disclosed in this publication consists of mashed apples to the amount of 25.81%, thickened mashed berries to the amount of 25.81%, wholegrain oatmeal to the amount of 24.81%, yoghurt powder to the amount of 13.9%, whey protein to the amount of 0.99% and water to the amount of 8.68%. All the above mentioned ingredients are mixed and homogenized in a Hobart mixer and then the so received slurry is dried on a drying room belt under precisely determined vacuum conditions.

The goal of the invention was to achieve a high-fibre cereal-fruit-vegetable snack with a high contents of fruits or vegetables and of a delicate and fragile structure as well as to work out a method to produce such a snack.

A high-fibre cereal-fruit-vegetable snack according to the invention with a high contents of dietary fibre is characterised by that included in the composition full fresh or deep-frozen fruits or vegetables comprise from 60 to 80% by weight of the overall dough mass prior to the thermal processing, the cereal brans comprises from 20 to 40% by weight of the overall dough mass prior to the thermal processing and additionally the snack is enriched by adding to it complementing ingredients in the form of vitamins, antioxidants and flavour additives.

A method of preparing a high-fibre cereal-fruit-vegetable snack according to the invention consist of that the cereal bran is extruded at a temperature from 100 to 160°C and under a pressure from 70 to 160 bar, then dried up to a humidity from 3 to 6%, and next is mixed in a heated drum mixer along with full fresh or deep-frozen fruits or vegetables and at the same time the mixture is heated up to a temperature from 40 to 60°C. The resulted mixture is crumbled to an extent so as to maintain fragments of fruits and vegetables contained therein, then the mixture is formed into a 0.5 to 1 mm thick band, the band is next spread on a perforated drier belt and dried at temperature from 90 to 130°C to achieve a humidity from 15 to 30%. This pre-dried mass is crumbled and next to such prepared mass enriching additives such as vitamins, antioxidants and flavour additives are added, then the mass is mixed again and formed into a snacks of required shapes which are next dried at a temperature from 90 to 130°C till a humidity from 3 to 5% of a final product is achieved.

An advantage of the cereal-fruit-vegetable snack according to the invention is a high contents of full fruits or vegetables, which results in a high contents of the dietary fibre, a low calorific value and as well in its very good flavour. Advantage of the method of preparing of the high-fibre cereal-fruit-vegetable snack is a much faster than conventional drying of fruits or vegetables on the basis of extruded cereal bran, a delicate structure and a high fragility of a snack.

Hereunder some exemplary compositions of the high-fibre cereal-fruit-vegetable snack according to the invention and methods of its preparing.

### Example 1.

A snack cereal comprises:

| Cereal fraction: | |
|---|---|
| - wheat bran | 25% by weight |

| Fruit fraction: | |
|---|---|
| - blackcurrant | 61 % by weight |
| - redcurrant | 8% by weight |

| Enriching fraction: | |
|---|---|
| - glucose syrup | 4% by weight |
| - vitamin pre-mix | 0.2% by weight |
| - antioxidant | 0.8% by weight |
| - aromatic oil | 1% by weight |

The cereal fraction undergoes a thermal-and-pressure treatment in a device called the extruder at a temperature of 120°C and at a pressure of 100 bar. The resulted semi-product is dried in a drier to a humidity of 4 %.

The fruit and cereal fraction are mixed in a drum mixer under pressure, heated further to a temperature of 50°C and then the resulting mass is crumbled in a one-screw device with a screen and knife. The resulting fruit and cereal mix with visible pieces of fruits is rolled to achieve a 0.5 mm band, which is spread on drying room belt and dried at 120°C till a humidity of 27% is reached. The mixture dried in this way after its pre-disintegration is enriched with the addition of the glucose syrup, the vitamin pre-mix, the antioxidant and the aromatic oil, mixed to achieve a uniform mass and formed in a forming device into a desired shape. The formed pieces of the enriched mass are dried in a belt drier at 120°C till a humidity of 3.5% is achieved.

### Example 2:

A snack cereal comprises:

| Cereal fraction: | |
|---|---|
| - wheat bran | 20% by weight |
| - rye bran | 5% by weight |
| - oats bran | 4% by weight |

| Fruit fraction: | |
|---|---|
| - red paprika | 45% by weight |
| - tomato | 20.2% by weight |

| Enriching fraction: | |
|---|---|
| - inulin | 3% by weight |
| - sea salt | 1 % by weight |
| - vitamin pre-mix | 0.1% by weight |
| - antioxidant | 0.8% by weight |
| - aromatic oil | 0.9% by weight |

The cereal fraction undergoes a thermal-and-pressure treatment in a device called the extruder at a temperature of 130°C and at a pressure of 120 bar. The resulted semi-product is dried in a drier to a humidity of 4.5%.

The fruit and cereal fraction are mixed in a drum mixer under pressure, heated further to a temperature of 60°C and then the resulting mass is crumbled in a one-screw device with a screen and knife. The resulting fruit and cereal mix with visible pieces of fruits is rolled to achieve a 0.6 mm band, which is spread on drying room belt and dried at 120°C till a humidity of 27% is reached. The mixture dried in this way after its pre-disintegration is enriched with the addition of the inulin, the sea salt, the vitamin pre-mix, the antioxidant and the aromatic oil, mixed and formed in a forming device into a desired shape. The formed pieces of the enriched mass are dried in a belt drier at 120°C till a humidity of 3.5 % is achieved.

## Claims

1. A high-fibre cereal-fruit-vegetable snack with a high contents of dietary fibre **characterised in that** included in the composition full fresh or deep-frozen fruits or vegetables comprise from 60 to 80% by weight of the overall dough mass prior to the thermal processing, the cereal brans comprises from 20 to 40% by weight of the overall dough mass prior to the thermal processing and additionally the snack is enriched by adding to it complementing ingredients in the form of vitamins, antioxidants and flavour additives.

2. A method of preparing a high-fibre cereal-fruit-vegetable snack **characterised in that** the cereal bran is extruded at a temperature from 100 to 160°C under a pressure from 70 to 160 bar, then dried up to a humidity from 3 to 6%, and next is mixed in a heated drum mixer along with full fresh or deep-frozen fruits or vegetables and at the same time the mixture is heated up to a temperature from 40 to 60°C and next is the mixture is crumbled to an extent so as to maintain fragments of fruits and vegetables contained therein, then the mixture is formed into a 0.5 to 1 mm thick band, the band is next spread on a perforated drier belt and dried at temperature from 90 to 130°C to achieve a humidity from 15 to 30%, then this pre-dried mixture is crumbled and next to such prepared mass enriching additives such as vitamins, antioxidants and flavour additives are added, then the mass is mixed again and formed into a snacks of required shapes which are next dried at a temperature from 90 to 130°C till a humidity from 3 to 5% of a final product is achieved.
